# EUROPÄISCHE PATENTSCHRIFT

(11) **EP 0 867 714 B1**
(45) Veröffentlichungstag und Bekanntmachung des Hinweises auf die Patenterteilung: **26.04.2006**
(21) Anmeldenummer: 98100243.9
(22) Anmeldetag: 09.01.1998
(51) Int. Cl.: G01N 27/30, G01N 27/407

(54) **Elektrodenmaterial**
Electrode material
Matériaux d'électrodes

(30) Priorität: 24.03.1997 DE 19712315
(43) Veröffentlichungstag der Anmeldung: 30.09.1998
(73) Patentinhaber: J. Dittrich Elektronic GmbH & Co.KG,, 76532 Baden-Baden (DE)
(72) Erfinder: Guth, Ulrich, Dr., 17491 Greifswald (DE); Jakobs, Steffen, Dr., 17489 Greifswald (DE); Häfele, Edelbert, Dr., 76228 Karlsruhe (DE)
(74) Vertreter: Haber, Jan Wilhelm

(56) Entgegenhaltungen:
- EP-A- 0 373 745
- JP-A- 56 129 700
- US-A- 4 562 124
- US-A- 4 789 561
- DATABASE WPI Section Ch, Week 198147, Derwent Publications Ltd., London, GB; Class L03, AN 1981-86319D & JP 56 129 700 A (KAGAKU GIJUTSU-CHO KINZ) 09 Oktober 1981

## Beschreibung

Die Erfindung betrifft ein Elektrodenmaterial für elektrochemische Sensoren aus einem Mischoxid.

Die Konzentration von unverbrannten Brennstoffen in sauerstoffhaltigen Gasen läßt sich bekanntermaßen im Verbrennungsgasstrom in-situ durch Sensoren bestimmen, die auf einem Festelektrolyten, z. B. yttriumstablilisierten Zirkondioxid, zwei Elektroden aufweisen, die in unterschiedlicher Weise auf das Meßgas reagieren. Das Potential der einen Elektrode ist weitgehend durch den Gleichgewichtssauerstoffpartialdruck des Gases, das der anderen dagegen vorwiegend durch den Partialdruck des Brenngases bestimmt, so daß zwischen den Elektroden im gleichen Gas eine Spannung meßbar ist, die von der Kohlenwasserstoffkonzentration abhängt. Vorzugsweise werden als CHₓ-sensitive Elektroden Gold und Legierungen von Gold und Platin verwendet (z. B. A. Vogel, G. Baier, V. Schüle, Sensors and Actuators 15 - 16 (1993) 147 - 150).

US 4,562,124 offenbart perowskitische Elektrodenmaterialien für Hochtemperatur-Elektrochemische-Zellen. US 4,789,561 offenbart ein Sauerstoffelektrodenmaterial basierend auf leitenden Festelektrolyten. EP-A-553452 offenbart Sauerstoffsensoren auf der Basis von Cupratmischoxiden.

JP-A-56129700 offenbart Alkalimetall-Titanat-Einkristalle mit Hollanditstruktur. Derartige Festelektrolyten finden beispielsweise als Feststoffzellen Verwendung.

Nachteilig an solchen Anordnungen ist, daß Goldelektroden in ihrer Morphologie bei den relativ hohen Arbeitstemperaturen der Zellen (≥ 700° C) zeitlich nicht stabil sind und demzufolge das sich daran einstellende Potential zeitlichen Änderungen unterworfen ist. Ein anderer Nachteil ist, daß mit solchen Elektroden beim Überschreiten des stöchiometrischen Verhältnisses (λ = 1) von Luft zu Kraftstoff meist ein Potentialsprung zu beobachten ist. Außerdem hängt das Potential solcher Elektroden von der Vorbehandlung hinsichtlich der Gasbeaufschlagung und der Temperatur ab, so daß sich Memoryeffekte bemerkbar machen, die bei Einsatz in Sensoren durch Nachkalibration eliminiert werden müssen.

Weiterhin sind als Elektrodenmaterialien Mischoxide vom Perowskit-Typ bekannt, die allgemein als Sauerstoffelektroden verwendet werden. An derartigen Elektroden setzt sich vorzugsweise nur Sauerstoff elektrochemisch um.

Es sind weiterhin perowskitische Elektrodenmaterialien bekannt, die brenngassensitiv sind. Diese Mischoxide vom Perowskit-Typ weisen jedoch folgende Nachteile auf: Beim Einbau aliovalenter Kationen in perowskitische Zusammensetzungen der allgemeinen Formel ABO₃ ändert sich oftmals die Sauerstoffstöchiometrie und es entstehen Sauerstoffionenleerstellen, die eine beachtliche Beweglichkeit aufweisen. Diese Defekte sind die Ursache für eine zusätzliche, katalytische Aktivität bei Oxidationsprozessen. Festelektrolytelektroden, die aus derartigem Elektrodenmaterial gebildet sind, setzen Kohlenwasserstoffe aus Brenngasen rein chemisch mit Restsauerstoff um und verfälschen dabei das Meßergebnis.

Im Hinblick auf die vorstehenden Nachteile des Standes der Technik liegt der Erfindung daher die Aufgabe zugrunde, ein brenngassensitives Elektrodenmaterial für elektrochemische Sensoren anzugeben, das redox- und hochtemperaturstabil ist und eine für den Einsatz als Elektrodenmaterial hinreichende elektrische Leitfähigkeit bei einer geringen katalytischen Aktivität aufweist

Diese Aufgabe wird von einem Elektrodenmaterial mit den Merkmalen des Anspruchs 1 gelöst. Es sollen Mischoxide mit nicht-perowskitischer Kristallstruktur eingesetzt werden. Die im Anspruch 1 genannten allgemeinen Formeln A_{3-y} (D) Bₓ C₅₋ₓ O_{12±δ}, D_{1-y} B₁₋ₓ Cₓ O_{4±δ} D_{2-y} B₈₋ₓ Cₓ O_{16±δ}, D_{2-y} B₁₊ₓ C₁₋ₓ O_{5±δ}, D_{2-y} Bₓ C₂₋ₓ O_{7±δ}, die die möglichen Zusammensetzungen der Mischoxide charakterisieren, entsprechen den allgemeinen Zusammensetzungen der Minerale Granat (A₃ B₅ O₁₂), Scheelit ( D B O₄), Hollandit ( D₂ B₈ O₁₆), Brownmillerit ( D₂ B₂ O₅ ) und Pyrochlor ( D₂ C₂ O₇).

Das in den Formeln aufgeführte δ steht für einen möglichen Ladungsausgleich bei Einsatz von Kationen mit verschiedenen Wertigkeiten. Geringfügige Fehlstellen im Sauerstoffteilgitter werden durch einen um den Betrag δ erhöhten oder emiedrigten Sauerstoffgehalt ausgeglichen. Das als multivalentes Ion B bezeichnete Ion, das aus der Reihe der Übergangsmetalle stammt, soll als Quelle von Überschuß- oder Defektelektronen dienen. Mit dem valenzstabilen Ion C kann die Konzentration der elektronischen Ladungsträger eingestellt werden. Das unterstöchiometrisch eingesetzte Kation A bzw. D wiederum beeinflußt die Konzentration der Defektelektronen und der Sauerstoffionenteerstellen. Durch die Kombination der vorgenannten lonentypen in einem nicht-perowskitischen Mischoxid mit den verschiedenen Zusammensetzungen der allgemeinen Formeln nach Anspruch 1 wird ein nahezu vollständiges Anionengitter geschaffen mit einer geringen Beweglichkeit der Sauerstoffleerstellen und einer damit einhergehenden geringen katalytischen Aktivität. Die elektrische Leitfähigkeit liegt in der Größenordnung der elektrischen Leitfähigkeit von Halbleitern und erleichtert damit eine solide elektrische Kontaktierung auf einer Elektrode des erfindungsgemäßen Elektrodenmaterials.

Vorteilhafte Ausgestaltungen des Gegenstandes der Erfindung sind in den Unteransprüchen aufgeführt.

Zur näheren Erläuterung der Erfindung dienen folgende Beispiele:

Das Elektrodenmaterial entspricht der allgemeinen Zusammensetzung:
1. A_{3 - y} Bₓ C_{5 - x} O_{12±δ}, mit x = 2 , y = 0,1 und A = Lanthan , B = Chrom , C = Gallium, so daß das Elektrodenmaterial aus La_{2,9} Cr₂ Ga₃ O_{12±δ} besteht. Alternativ zu der angegebenen Zusammensetzung kann für A auch Ytttrium oder Gadolinium eingesetzt werden.
2. D_{2-y} 8₁₊ₓ C O_{5±δ}, mit x = 0,4 , y = 0,2 und D = Strontium, B = Chrom, C = Niob, so daß das Elektrodenmaterial aus Sr_{1,8} Cr_{1,4} Nb_{0,6} O_{5±δ} besteht.
3. A_{3 - y} Bₓ C_{5 - x} O_{12±δ}, mit x = 0,2 , y = 0,1 und A = Gadolinium , B = Chrom, C = Gallium, so daß das Elektrodenmaterial aus Gd _{2,9} Cr _{0,2} Ga_{4,8} O_{12±δ} besteht.
4. A_{3 - y} Bₓ C_{5 - x} O_{12±δ}, mit x gegen 0, y = 0,3 und A = Gadolinium, C = Gallium.

Es ergibt sich damit ein Elektrodenmaterial der Zusammensetzung Gd _{2,7} Ga ₅ O _{12±δ}, das - ebenso wie die Beispiele 1 und 3 - eine dem Granat entsprechende Kristallstruktur aufweist.

Die als Beispiele aufgeführten Elektrodenmaterialien sind sogenannte Gemischtleiter (elektronische Leitung/Sauerstoffionenleitung), und damit als Zusammensetzungen für Elektroden von elektrochemischen Sensoren, insbesondere für brenngassensitive Fühler, geeignet.

## Patentansprüche

1. Elektrochemischer Sensor mit einer Elektrode die besteht aus einem Mischoxid mit der Zusammensetzung der allgemeinen Formel
A_{3-y}(D)BₓC₅₋ₓO_{12±δ}, wobei x im Bereich von 0,005 bis 2,995 liegt, oder
D_{1-y}B₁₋ₓCₓO_{4±δ}, wobei x im Bereich von 0,005 bis 0,995 liegt, oder
D_{2-y}B_{δ-x}CₓO_{18±δ}, wobei x im Bereich von 0.005 bis 7,995 liegt, oder
D_{2-y}B₁₊ₓC₁₋ₓO_{5±δ} , wobei x im Bereich von 0,005 bis 0,995 liegt, oder
D_{2-y}BₓC₂₋ₓO_{7±δ} , wobei x im Bereich von 0,005 bis 1,995 liegt,
wobei y im Bereich von 0,005 bis 0,4,
wobei A oder/und D ein unterstöchiometrisch eingesetztes Kation aus der Reihe der Lanthanide oder der Erdalkalien ist, wobei B ein multivalentes Ion ist, wobei C ein Ion aus der Gruppe C, Al, Ga, Nb oder Ta ist, und
wobei das Mischoxid eine nichtperowskitische Kristallstruktur aufweist.

2. Elektrode nach Anspruch 1, **dadurch gekennzeichnet , dass** für das multivalente Ion B ein Übergangsmetall, vorzugsweise Cr, Mn, Co, Fe oder Ni eingesetzt wird.

## Claims

1. An electrochemical sensor with an electrode made of a mixed oxide with the composition of the general formula
A_{3-y}(D)BₓC₅₋ₓO_{12±δ}, where x lies in the range from 0.005 to 2.995, or
D_{1-y} B₁₋ₓ Cₓ O_{4±δ}, where x lies in the range from 0.005 to 0.995, or
D_{2-y} B₈₋ₓ Cₓ O_{16±δ}, where x lies in the range from 0.005 to 7.995, or
D_{2-y} B₁₊ₓ C₁₋ₓ O_{5±δ}, where x lies in the range from 0.005 to 0.995, or
D_{2-y} Bₓ C₂₋ₓ O_{7±δ}, where x lies in the range from 0.005 to 1.995,
where y is in the range from 0.005 to 0.4,
where A and/or D is a cation used substoichiometrically from the series of the lanthanides or the alkaline earths, where B is a multivalent ion,
where C is an ion from the group C, Al, Ga, Nb or Ta, and
where the mixed oxide has a non-perovskite crystalline structure.

2. The electrode according to claim 1, **characterised in that** a transition metal, preferably Cr, Mn, Co, Fe or Ni, is used for multivalent ion B.

## Revendications

1. Capteur électrochimique avec une électrode en un oxyde mixte de la composition selon la forme générale
A_{3-y} (D) Bₓ C₅₋ₓ O_{12±δ}, x se situant dans la fourchette de 0,005 à 2,995 ou
D_{1-y} B₁₋ₓ Cₓ O_{4±δ} , x se situant dans la fourchette de 0,005 à 0,995 ou
D_{2-y} B₈₋ₓ Cₓ O_{16±δ}, x se situant dans la fourchette de 0,005 à 7,995 ou
D_{2-y} B₁₊ₓ C₁₋ₓ O_{5±δ}, x se situant dans la fourchette de 0,005 à 0,995 ou
D_{2-y} Bₓ C₂₋ₓ O_{7±δ}, x se situant dans la fourchette de 0,005 à 1,995
y se situant dans la fourchette de 0,005 à 0,4,
A et/ou D étant un cation sous-stoechiométrique utilisé de la série des lanthanides ou des bases alcalinoterreuses, B étant un ion multivalent, C étant un ion du groupe C, Al, Ga, Nb ou Ta et
l'oxyde mixte étant une structure cristalline non perovskite.

2. Electrode selon la revendication 1, **caractérisé en ce que** pour l'ion B multivalent, on utilise un métal de transition, de préférence du Cr, Mn, Co, Fe ou Ni.
